# EUROPEAN PATENT SPECIFICATION

(11) **EP 4 336 601 B1**
(45) Date of publication and mention of the grant of the patent: **19.11.2025**
(21) Application number: 22941543.5
(22) Date of filing: 23.12.2022
(51) Int. Cl.: H01M 4/62, H01M 4/02, H01M 4/04, H01M 4/133, H01M 4/136, H01M 4/139, H01M 10/0525, H01M 10/42, H01M 4/583, H01M 4/58

(54) **BATTERY SLURRY, POSITIVE ELECTRODE SHEET, NEGATIVE ELECTRODE SHEET AND LITHIUM BATTERY**
BATTERIESUSPENSION, POSITIVELEKTRODENFOLIE, NEGATIVELEKTRODENFOLIE UND LITHIUMBATTERIE
SUSPENSION DE BATTERIE, FEUILLE D'ÉLECTRODE POSITIVE, FEUILLE D'ÉLECTRODE NÉGATIVE ET BATTERIE AU LITHIUM

(30) Priority: 11.05.2022 CN 202210514539
(43) Date of publication of application: 13.03.2024
(73) Proprietor: Hithium Tech HK Limited, Hong Kong (HK)
(72) Inventor: LIAO, Linping, Xiamen, Fujian 361100 (CN); WANG, Shiwen, Xiamen, Fujian 361100 (CN); YU, Lili, Xiamen, Fujian 361100 (CN)
(74) Representative: DREISS Patentanwälte PartG mbB
(86) International application number: PCT/CN2022/141319
(87) International publication number: WO 2023/216610

(56) References cited:
- EP-A1- 2 533 335
- WO-A1-2014/084155
- WO-A1-2021/246364
- CN-A- 106 220 779
- CN-A- 108 933 260
- CN-A- 108 987 751
- CN-A- 113 299 918
- CN-A- 114 883 563
- KR-A- 20190 086 548
- US-A1- 2014 342 226

## Description

### CROSS-REFERENCE TO RELATED APPLICATION

The present disclosure claims priority to Chinese patent application No. 202210514539.3, filed with China National Intellectual Property Administration on May 11, 2022 and entitled "BATTERY SLURRY, POSITIVE ELECTRODE PLATE, NEGATIVE ELECTRODE PLATE AND LITHIUM BATTERY ".

### TECHNICAL FIELD

The present disclosure belongs to the field of lithium batteries, and in particular, to a battery slurry, a positive electrode plate, a negative electrode plate, and a lithium battery.

### BACKGROUND

An aqueous binder for a lithium battery has the characteristics of low cost and environmental friendliness, but its use is limited by hard and brittle electrode plates caused during the process of preparing the electrode plates. In view of the hard and brittle electrode plates caused by the aqueous binder, powder falls from the plate, and is easily introduced into the battery, resulting in internal short-circuit and even fire and explosion. However, there is no good solution to solve this problem yet. EP2533335A1 relates to a binder composition for the positive electrode of an electric storage device. US2014/342226A1 provides an electrode for a lithium ion secondary battery including an electrode active material and a water-soluble polymer. WO2021/246364A1 provides a nonaqueous secondary battery electrode binder which is capable of reducing the occurrence of cracks in an electrode active material layer that is formed on a collector while also greatly improving the peel strength of the electrode active material layer with respect to the collector. CN106220779A relates to an acrylonitrile copolymer adhesive and application thereof in lithium ion batteries. KR20190086548A provides an anode material composition for a metal-ion battery that comprises an active material coating, a current conductive current collector, and a conductive interlayer coupling the active material coating to the current collector. CN108933260A discloses a water-soluble electrode binder, an electrode plate and a preparation method thereof, and an electrochemical energy storage device. WO2014/084155A1 provides an electricity storage device which comprises an electrolyte layer and a positive electrode and a negative electrode that are arranged so as to sandwich the electrolyte layer.

### SUMMARY

The present disclosure aims to solve one of the technical problems in the related art at least to a certain extent. Therefore, an object of the present disclosure is to provide a battery slurry, a positive electrode plate, a negative electrode plate, and a lithium battery. The battery slurry is used to effectively solve the problem of hard and brittle electrode plates caused by the use of existing binders. In addition, a thick coating is unlikely to crack, a cold-pressed electrode plate is unlikely to break, powder is unlikely to fall in die-cutting and winding processes, thereby avoiding short-circuit inside a battery, and even fire, explosion, and other safety accidents.

In a first aspect of the present disclosure, the present disclosure provides a battery slurry. According to an embodiment of the present disclosure, the battery slurry includes an aqueous binder and an organic additive, wherein the organic additive includes at least one of acetamide or 1,2-ethanedithiol;
wherein a monomer of the aqueous binder comprises at least one of acrylate, acrylic acid, acrylonitrile, or acrylamide;
wherein a mass ratio of the aqueous binder to the organic additive is 22: (0.5 to 2);
wherein the battery slurry is a positive electrode slurry, and the positive electrode slurry comprises a positive electrode active material, a conductive agent, the aqueous binder, and the organic additive; and
a mass ratio of the positive electrode active material, the conductive agent to a sum of the aqueous binder and the organic additive is (94 to 98): (0.5 to 6): (2 to 5).

Therefore, by adding the aqueous binder and the organic additive (the organic additive includes at least one group of -NHR and -SH) to the battery slurry, the problem of hard and brittle electrode plates caused by the use of existing binders can be effectively solved, a thick coating can be unlikely to crack, a cold-pressed electrode plate can be unlikely to break, and powder can be unlikely to fall in die-cutting and winding processes, thereby avoiding short-circuit inside a battery, and even fire, explosion, and other safety accidents.

According to the first aspect of the present disclosure, a mass ratio of the aqueous binder to the organic additive is 22: (0.5 to 2). Therefore, the problems of hard and brittle electrode plates, powder fall and the like caused by the use of existing binders can be effectively solved.

According to the first aspect of the present disclosure, the organic additive includes at least one of N-methylacetamide, triethylamine, acetamide, ethylenediamine, ethanethiol, 1,2-ethanedithiol, or polythiol. Therefore, the problems of hard and brittle electrode plates, powder fall and the like caused by the use of existing binders can be effectively solved.

According to a second aspect of the present disclosure, the present disclosure provides a positive electrode plate. According to an embodiment of the present disclosure, the positive electrode plate includes a positive electrode current collector and a positive electrode active material layer formed on a surface of the positive electrode current collector. The positive electrode active material layer is formed from the positive electrode slurry.

Therefore, the positive electrode slurry is coated on the surface of the positive electrode current collector to form the positive electrode plate. The organic additive in the positive electrode slurry has polar functional groups, and thus can interact with carboxyl and ester group of the aqueous binder, as well as the conductive agent, the positive electrode active material and the like to generate intermolecular forces, thereby achieving uniform dispersion of the positive electrode active material. Meanwhile, during the coating drying process, the organic additive with -NHR and/or -SH interacts with the aqueous binder to resist the stress caused by the evaporation of the solvent during the drying process, such that the film surface is unlikely to crack. Therefore, the positive electrode plate has flexibility and toughness while maintaining excellent bonding performance, such that the problem of hard and brittle electrode plates caused by the use of existing binders can be effectively solved. In addition, a thick coating is unlikely to crack, a cold-pressed electrode plate is unlikely to break, and powder is unlikely to fall in die-cutting and winding processes, thereby avoiding short-circuit inside a battery, and even fire, explosion, and other safety accidents.

According to a third aspect of the present disclosure, the present disclosure provides a lithium battery. According to an embodiment of the present disclosure, the lithium battery includes the positive electrode plate. Therefore, the lithium battery has excellent cycle performance.

The additional aspects and advantages of the present disclosure will be partially provided in the following description, and will partially become obvious from the following description, or be learned through the practice of the present disclosure.

### DESCRIPTION OF EMBODIMENTS

The embodiments detailed below are intended to explain the present disclosure, rather than being construed as limitation to the present disclosure.

According to an aspect of the present disclosure, the present disclosure provides a battery slurry. In an embodiment of the present disclosure, the battery slurry includes an aqueous binder and an organic additive. The organic additive has at least one of -NHR and -SH, and R is alkyl.

The inventors have found that, by adding the aqueous binder and the organic additive (the organic additive includes at least one group of -NHR and -SH) to the battery slurry, the organic additive of the battery slurry has polar functional groups, and can interact with active materials of the aqueous binder such as carboxyl groups and ester groups to generate intermolecular forces, thereby achieving uniform dispersion of the active materials. Meanwhile, during a coating drying process, the organic additive with -NHR and/or -SH interacts with the aqueous binder to resist a stress generated by the evaporation of a solvent during the drying process so that a film surface is unlikely to crack. In this way, the problem of hard and brittle electrode plates caused by the use of existing binders can be effectively solved. In addition, a thick coating is unlikely to crack, a cold-pressed electrode plate is unlikely to break, powder is unlikely to fall in die-cutting and winding processes, and a powder falling rate of the folded electrode plate is smaller than 5.47 wt%), thereby avoiding short-circuit inside a battery, and even fire, explosion, and other safety accidents. For example, the organic additive has both -NHR and -SH groups. That is, a mixture of an organic additive having -NHR groups and an organic additive having -SH groups is used. The -NHR groups mainly provide an electrostatic dispersion function. The -SH groups are prone to esterification and are more likely to react with the aqueous binder during the coating drying stage, thereby providing a partial cross-linking function, resisting the stress caused by uneven drying of the solvent, and preventing the film surface from cracking.

In an embodiment of the present disclosure, a mass ratio of the aqueous binder to the organic additive in the battery slurry is 22: (0.5 to 2). The inventors have found that, if the addition amount of the aqueous binder is too low, a peeling force of the formed electrode plate is reduced, and powder fall off in the rolling, slitting, and winding processes; if the addition amount of the organic additive is too high, high cost is caused while part of small molecule additives cannot be baked out in the coating process, which may affect the cycle performance of a battery cell; and if the addition amount of the organic additive is too low, the flexibility of the film surface deteriorates. Further, a monomer of the aqueous binder includes, but is not limited to at least one of acrylate, acrylic acid, acrylonitrile, or acrylamide. The organic additive includes, but is not limited to at least one of N-methylacetamide, triethylamine, acetamide, ethylenediamine, ethanethiol, 1,2-ethanedithiol, or polythiol, e.g., 1,2-ethanedithiol and amide small molecules.

In an embodiment of the present disclosure, the battery slurry is a positive electrode slurry, and the positive electrode slurry includes a positive electrode active material, a conductive agent, the aqueous binder, and the organic additive. A mass ratio of the positive electrode active material, the conductive agent to a sum of the aqueous binder and the organic additive is (94 to 98): (0.5 to 6): (2 to 5). The inventors have found that, if the addition amount of the positive electrode active material is too low, the amount of main materials in the battery slurry formula will be less, resulting in a low battery cell capacity. Further, the film surface is harder and more brittle, and the rolling is broken. If the addition amount of the positive electrode active material is excessive, a peeling force of the formed electrode plate is reduced, and powder fall off in the rolling, slitting, and winding processes. It may be noted that, those skilled in the art may select the specific kinds of the positive electrode active material and the conductive agent based on actual needs. For example, the positive electrode active material is lithium iron phosphate, and the conductive agent includes at least one of carbon nanotubes, graphene, or conductive carbon black.

In a further embodiment of the present disclosure, the battery slurry is a negative electrode slurry, and the negative electrode slurry includes graphite, a conductive agent, the aqueous binder, and the organic additive. A mass ratio of the graphite, a mass of the conductive agent and a sum of the aqueous binder and the organic additive is (94 to 98) :(0.5 to 6): (2 to 5). The inventors have found that, if the addition amount of the graphite is too low, the amount of main materials in the battery slurry formula will be less, resulting in a low energy density of the battery cell, and further, the film surface is more hard and brittle and the rolling is broken; and if the addition amount of the graphite is too high, a peeling force of the formed electrode plate is reduced, and powder fall off in the rolling, slitting, and winding processes. It should be noted that, those skilled in the art may select the specific kind of the conductive agent based on actual needs. For example, the conductive agent includes at least one of carbon nanotubes, graphene, or conductive carbon black.

According to a second aspect of the present disclosure, the present disclosure provides a positive electrode plate. In an embodiment of the present disclosure, the positive electrode plate includes a positive electrode current collector and a positive electrode active material layer. The positive electrode active material layer is formed on a surface of the positive electrode current collector, and is formed from the positive electrode slurry.

Therefore, the positive electrode slurry is coated on the surface of the positive electrode current collector to form the positive electrode plate. The organic additive in the positive electrode slurry has polar functional groups, and thus can interact with carboxyl and ester group of the aqueous binder, as well as the conductive agent, the positive electrode active material and the like to generate intermolecular forces, thereby achieving uniform dispersion of the positive electrode active material. Meanwhile, during the coating drying process, the organic additive with -NHR and/or -SH interacts with the aqueous binder to resist the stress caused by the evaporation of the solvent during the drying process, such that the film surface is unlikely to crack. Therefore, the positive electrode plate has flexibility and toughness while maintaining excellent bonding performance, such that the problem of hard and brittle electrode plates caused by the use of existing binders can be effectively solved. In addition, a thick coating is unlikely to crack, a cold-pressed electrode plate is unlikely to break, powder is unlikely to fall in die-cutting and winding processes, and a powder falling rate of the folded electrode plate is smaller than 5.47 wt%), thereby avoiding short-circuit inside a battery, and even fire, explosion, and other safety accidents.

It should be noted that, the characteristics and advantages described above for the battery slurry are also applicable to the positive electrode plate, which will not be repeated herein.

According to a third aspect of the present disclosure, the present disclosure provides a negative electrode plate. In an embodiment of the present disclosure, the negative electrode plate includes a negative electrode current collector and a negative electrode active material layer. The negative electrode active material layer is formed on a surface of the negative electrode current collector, and is formed from the above negative electrode slurry.

Therefore, the negative electrode slurry is coated on the surface of the negative electrode current collector to form the negative electrode plate. The organic additive in the negative electrode slurry has polar functional groups, and thus can interact with carboxyl and ester group of the aqueous binder, the negative electrode active material and the like to generate intermolecular forces, thereby achieving uniform dispersion of the negative electrode active material. Meanwhile, during the coating drying process, the organic additive with -NHR and/or -SH interacts with the aqueous binder to resist the stress caused by the evaporation of the solvent during the drying process, such that the film surface is unlikely to crack. Therefore, the negative electrode plate has flexibility and toughness while maintaining excellent bonding performance, such that the problem of hard and brittle electrode plates caused by the use of existing binders can be effectively solved. In addition, a thick coating is unlikely to crack, a cold-pressed electrode plate is unlikely to break, powder is unlikely to fall in die-cutting and winding processes, and a powder falling rate of the folded electrode plate is smaller than 5.47 wt%), thereby avoiding short-circuit inside a battery, and even fire, explosion, and other safety accidents.

It should be noted that, the characteristics and advantages described above for the battery slurry are also applicable to the negative electrode plate, which will not be repeated herein.

According to a fourth aspect of the present disclosure, the present disclosure provides a lithium battery. In an embodiment of the present disclosure, the lithium battery includes the positive electrode plate and/or the negative electrode plate. Therefore, the lithium battery has excellent cycle performance.

It should be noted that, the characteristics and advantages described above for the positive electrode plate and/or the negative electrode plate are also applicable to the lithium battery, which will not be repeated herein.

The Examples of the present disclosure are described in detail below. It should be noted that, the examples described below are exemplary only, and are only intended to explain the present disclosure, rather than being construed as limitation to the present disclosure. Further, if not expressly stated, all reagents employed in the following examples are commercially available, or may be synthesized in accordance with the method of the present disclosure or known methods. Conditions that are not listed are also readily available to those skilled in the art.

### Example 1

A positive electrode slurry includes 95 wt% of lithium iron phosphate, 2 wt% of binder, and 3 wt% of conductive carbon black. The binder includes an aqueous binder of acrylate-acrylic acid-acrylonitrile-acrylamide and an organic additive of acetamide, and a mass ratio of the aqueous binder to the organic additive is 22:1.

A method of preparing a positive electrode plate includes coating the positive electrode slurry on two surfaces of an aluminum foil and rolling the aluminum foil after the completion of coating, to form a positive electrode active material layer on the surfaces of the aluminum foil. A coating weight is in a range of 147 g/m² to 165 g/m².

A method of preparing a battery cell includes assembling the battery cell by taking the positive electrode plate as a positive electrode, taking graphite as a negative electrode, taking a mixed solution containing lithium hexafluorophosphate, vinyl carbonate, dimethyl carbonate, methyl ethyl carbonate, and various additives as an electrolytic solution (lithium hexafluorophosphate has a concentration of 1 mol/L), and taking a PP separator as a separator.

### Example 2

The aqueous binder is acrylate-acrylic acid-acrylonitrile-acrylamide, the organic additive is 1,2-ethanedithiol, and the rest is the same as Example 1.

### Example 3

The aqueous binder is acrylate-acrylic acid-acrylonitrile-acrylamide, the organic additive includes a mixture of 1,2-ethanedithiol and acetamide, and the rest is the same as Example 1.

### Comparative example

There is no organic additive to be added, and the rest is the same as Example 1.

The production condition, peeling force and powder falling rate during winding of the positive electrode plates in Examples 1 to 3 and Comparative Example, as well as the cycle performances of the batteries in Examples 1 to 3 and Comparative Example are evaluated, and the specific characterization results are shown in Tables 1 to 2.

**Table 1 Production condition, peeling force and powder falling rate during winding of the positive electrode plates in Examples 1 to 3 and Comparative Example**

| | Production condition | Solid content in slurry | Peeling force | Powder falling rate during winding |
|---|---|---|---|---|
| Example 1 | The coating is not cracked, and the positive electrode plate can be normally rolled and slitted. | 64.5 wt% | 8.5 N/m | 4.98% |
| Example 2 | The coating is not cracked, and the positive electrode plate can be normally rolled and sliced. | 67.1 wt% | 10.2 N/m | 4.50% |
| Example 3 | The coating is not cracked, and the positive electrode plate can be normally rolled and sliced. | 68.8 wt% | 9.7 N/m | 4.2% |
| Comparative Example | The coating is cracked and the rolling is broken frequently, the positive electrode plate is sliced manually, rather than being sliced on a slitter. | 62 wt% | 8.3 N/m | 5.47 wt% |

**Table 2 Cycle performance of the batteries in Examples 1 to 3 and Comparative Example**

| | Capacity retention rate after 2000 cycles |
|---|---|
| Example 1 | 83.11% |
| Example 2 | 84.14% |
| Example 3 | 83.27% |
| Comparative Example | 82.15% |

A method of testing the powder falling rate during the winding includes: (1) weighing an electrode plate to obtain Y; (2) winding the electrode plate by a manual winding machine; (3) placing the wound electrode plate on a glass fixture; (4) gently brushing off the powder and material falling from the electrode plate by a soft brush; (5) weighing the wound electrode plate from which the powder has been brushed away, to obtain a weight Z after winding; and (6) calculating a powder falling rate through an equation X=(Y-Z)/Y×100%.

In the description of the present specification, the description of referring terms, such as "an embodiment", "some embodiments", "an example", "a specific example" and "some examples", integrate particular features, structures, materials or characteristics described in combination of the embodiments or examples and included in at least one embodiment or example of the present disclosure. In the description, schematic description of the above terms does not necessarily refer to the same embodiment or example. Furthermore, the described particular features, structures, materials or characteristics can be integrated with any one or more embodiments or examples in a proper manner. In addition, in the absence of contradiction, those skilled in the art can integrate and combine different embodiments or examples described in this specification and the features of different embodiments or examples.

The embodiments of the present disclosure are described above in conjunction with the accompanying drawings, but the present disclosure is not limited to the above specific embodiments. The above specific embodiments are only exemplary rather than limiting. Under the enlightenment of the present application, those skilled in the art can make many forms without departing from the purpose of the present disclosure and the scope of the claims, all of which fall within the scope of the present disclosure.

## Claims

1. A battery slurry, comprising an aqueous binder and an organic additive,
wherein a monomer of the aqueous binder comprises at least one of acrylate, acrylic acid, acrylonitrile, or acrylamide; **characterised in that** the organic additive comprises at least one of acetamide or 1,2-ethanedithiol;
wherein a mass ratio of the aqueous binder to the organic additive is 22: (0.5 to 2);
wherein the battery slurry is a positive electrode slurry, and the positive electrode slurry comprises a positive electrode active material, a conductive agent, the aqueous binder, and the organic additive; and
wherein a mass ratio of the positive electrode active material, the conductive agent to a sum of the aqueous binder and the organic additive is (94 to 98): (0.5 to 6): (2 to 5).

2. A positive electrode plate, comprising:
a positive electrode current collector; and
a positive electrode active material layer formed on a surface of the positive electrode current collector, the positive electrode active material layer being formed from the positive electrode slurry according to claim 1.

3. A lithium battery, comprising the positive electrode plate according to claim 2.

## Patentansprüche

1. Batterieschlamm, umfassend ein wässriges Bindemittel und einen organischen Zusatzstoff, wobei ein Monomer des wässrigen Bindemittels mindestens eines aus Acrylat, Acrylsäure, Acrylnitril oder Acrylamid umfasst; **dadurch gekennzeichnet, dass** der organische Zusatzstoff mindestens eines aus Acetamid oder 1,2-Ethanedithiol umfasst;
wobei ein Massenverhältnis des wässriges Bindemittels zum organischen Zusatzstoff 22: (0,5 bis 2) beträgt;
wobei der Batterieschlamm ein Positivschlamm ist und der Positivschlamm ein Positivelektrodenaktivmaterial, ein leitfähiges Mittel, das wässrige Bindemittel und den organischen Zusatzstoff umfasst; und
wobei ein Massenverhältnis des Positivelektrodenaktivmaterials, des leitfähigen Mittels zur Summe aus dem wässrigen Bindemittel und dem organischen Zusatzstoff (94 bis 98): (0,5 bis 6): (2 bis 5) beträgt.

2. Positivelektrodenplatte, umfassend:
einen positivelektrodenstromkollektor; und
eine auf einer Oberfläche des Positivelektrodenstromkollektors gebildete Positivelektrodenaktivmaterialschicht, wobei die Positivelektrodenaktivmaterialschicht aus dem positivelektrodenschlamm nach Anspruch 1 gebildet ist.

3. Lithiumbatterie, umfassend die positivelektrodenplatte nach Anspruch 2.

## Revendications

1. Une pâte de batterie, comprenant un liant aqueux et un additif organique, un monomère du liant aqueux comprenant au moins l'un parmi de l'acrylate, de l'acide acrylique, de l'acrylonitrile ou de l'acrylamide ; **caractérisée en ce que** l'additif organique comprend au moins l'un parmi de l'acétamide ou du 1,2-éthanedithiol ;
le rapport massique du liant aqueux à l'additif organique étant de 22 : (0,5 à 2) ;
la pâte de batterie étant une pâte d'électrode positive, et la pâte d'électrode positive comprenant un matériau actif d'électrode positive, un agent conducteur, le liant aqueux et l'additif organique ; et
le rapport massique du matériau actif d'électrode positive, de l'agent conducteur à la somme du liant aqueux et de l'additif organique étant de (94 à 98) : (0,5 à 6) : (2 à 5).

2. Une plaque d'électrode positive, comprenant :
un collecteur de courant d'électrode positive ; et
une couche de matériau actif d'électrode positive formée sur une surface du collecteur de courant d'électrode positive, la couche de matériau actif d'électrode positive étant formée à partir de la pâte d'électrode positive selon la revendication 1.

3. Une batterie au lithium, comprenant la plaque d'électrode positive selon la revendication 2.
